# EUROPEAN PATENT APPLICATION

(11) **EP 4 358 223 A1**
(43) Date of publication of application: **24.04.2024**
(21) Application number: 21946081.3
(22) Date of filing: 18.06.2021
(51) Int. Cl.: H01M 10/0585

(54) **LITHIUM SECONDARY BATTERY**

(71) Applicant: Terawatt Technology K.K., Yokohama-shi, Kanagawa 226-0026 (JP)
(72) Inventor: OGATA, Ken, Yokohama-shi, Kanagawa 226-0026 (JP)
(74) Representative: Mewburn Ellis LLP
(86) International application number: PCT/JP2021/023215
(87) International publication number: WO 2022/264406

(57) **Abstract**

The present invention provides a lithium secondary battery with excellent energy efficiency per unit volume and unit weight. A lithium secondary battery according to an embodiment includes a positive electrode, a negative electrode which does not have a negative electrode active material, and a separator which is arranged between the positive electrode and the negative electrode. At least a part of an edge of the negative electrode, and an edge of the separator corresponding to the part of the edge of the negative electrode are arranged at the same position in a plane view.

## Description

### Technical Field

The present invention relates to a lithium secondary battery.

### Background Art

In recent years, the technology of converting natural energy such as solar light and wind power into electric energy has attracted attention. Under such a situation, various secondary batteries have been developed as a highly-safe power storage device capable of storing a lot of electric energy.

Among them, lithium secondary batteries which perform charge and discharge by transferring lithium ions between a positive electrode and a negative electrode are known to exhibit a high voltage and a high energy density. As a typical lithium secondary battery, a lithium ion secondary battery (LIB) that has an active material capable of retaining a lithium element in the positive electrode and the negative electrode and performs charge and discharge by exchanging lithium ions between the positive electrode active material and the negative electrode active material is known.

For the purpose of realizing a high energy density, a lithium secondary battery (lithium metal battery; LMB) that a lithium metal is used as the negative electrode active material, instead of a material into which the lithium ion can be inserted, such as a carbon material, has been developed. For example, Patent Document 1 discloses a rechargeable battery using, as a negative electrode, an electrode based on a lithium metal.

For the purpose of further achieving a high energy density and improving productivity, or the like, a lithium secondary battery using a negative electrode that does not have a negative electrode active material such as the carbon material and the lithium metal has been developed. For example, Patent Document 2 discloses a lithium secondary battery including a positive electrode, a negative electrode, and a separation membrane and an electrolyte interposed therebetween. In the negative electrode, metal particles are formed on a negative electrode current collector and transferred from the positive electrode by charging to form lithium metal on the negative electrode current collector in the negative electrode. Patent Document 2 discloses that such a lithium secondary battery shows the possibility of providing a lithium secondary battery which has overcome the problem due to the reactivity of the lithium metal and the problem caused during assembly process and therefore has improved performance and service life.

### Citation List

### Patent Documents

Patent Document 1: PCT Japanese Translation Patent Publication No. 2006-500755
Patent Document 2: PCT Japanese Translation Patent Publication No. 2019-505971

### Summary of Invention

### Technical Problem

In the lithium secondary battery as described above, a pouch-type (or sometimes referred to as a laminate-type) lithium secondary battery in which the positive electrode and the negative electrode are laminated with a separator interposed therebetween and enclosed by a laminate sheet may be configured. In such a pouch-type lithium secondary battery, in order to prevent the negative electrode active material precipitated on the negative electrode from being separated from the negative electrode and coming into contact with the positive electrode to cause a short circuit, the positive electrode and the negative electrode are arranged with a margin provided so that the edges of the positive electrode and the negative electrode are separated by a predetermined distance or more from the edge of the sheet-like separator. In the present specification, a distance between the edge of the separator and the edge of the positive electrode or the negative electrode in a plane view is referred to as a margin.

However, in a case where the margin is provided as described above, it is necessary to make the positive electrode and the negative electrode slightly smaller than the separator. Therefore, the energy density per unit volume and unit weight is limited due to the limitation of the size of the electrodes.

An object of the present invention is to increase the energy density per unit volume and unit weight of a lithium secondary battery.

### Solution to Problem

A lithium secondary battery according to an embodiment of the present invention includes a positive electrode, a negative electrode that does not have a negative electrode active material, and a separator that is arranged between the positive electrode and the negative electrode. In the lithium secondary battery, at least a part of an edge of the negative electrode and an edge of the separator corresponding to the part of the edge of the negative electrode are arranged at the same position in a plane view.

The present inventors have found that in a configuration in which the negative electrode does not have a negative electrode active material, a short circuit between the electrodes can be prevented without providing a margin between the edge of the separator and the edge of the negative electrode. It is presumed that the reason is that, since there is no active material in the negative electrode, the wrapping of the material at the end surface of the negative electrode material can be eliminated. The lithium secondary battery of the present invention has a configuration in which the negative electrode has no negative electrode active material, and the edge of the separator and the edge of the negative electrode are arranged at the same position in a plane view, that is, a margin which is a distance between the edge of the separator and the edge of the negative electrode in a plane view is substantially 0. As a result, the negative electrode can be made larger than that in the related art while preventing a short circuit between the electrodes. According to such a lithium secondary battery of the present invention, a configuration in which energy efficiency per unit volume and unit weight is increased can be adopted.

In the above-described lithium secondary battery, it is preferable to have a configuration in which the negative electrode and the separator each have a rectangular shape. Further, it is preferable that at least one side of the rectangular negative electrode is arranged at the same position in a plane view as a side of the rectangular separator corresponding to the one side of the negative electrode.

In such a lithium secondary battery, the lithium secondary battery having the rectangular negative electrode and separator can be configured to have a larger negative electrode than in the related art. As a result, a configuration in which the energy efficiency per unit volume and unit weight of the lithium secondary battery is increased can be adopted.

In the lithium secondary battery described above, it is preferable that other sides of the negative electrode excluding the at least one side are positioned on an inner side with respect to other sides of the separator corresponding to the other sides of the negative electrode in a plane view. At this time, it is preferable that a distance between the other sides of the negative electrode and the corresponding other sides of the separator in a plane view is 0.3 mm or more and 5.0 mm or less.

In such a lithium secondary battery, in a plane view, for some sides of four sides of the negative electrode, a margin, which is a distance between the edge of the separator and the edge of the negative electrode in the plane view, is set to substantially 0, and for other sides, a margin of 0.3 mm or more and 5.0 mm or less is provided. With this configuration, a configuration in which the size of the negative electrode is larger than in the related art, while providing a minimum margin for a necessary portion can be adopted.

In the lithium secondary battery described above, it is preferable that four sides of the negative electrode and four sides of the separator are arranged at the same positions in a plane view.

According to such a lithium secondary battery, the size of the negative electrode in a plane view can be the same as the size of the separator. As a result, a configuration in which the size of the negative electrode is further increased can be adopted, and a lithium secondary battery with improved energy efficiency per unit volume and unit weight can be obtained.

In the above-described lithium secondary battery, it is preferable that an edge of the positive electrode is positioned on an inner side with respect to the corresponding edge of the negative electrode in a plane view. At this time, it is preferable a distance between the edge of the positive electrode and the corresponding edge of the negative electrode in a plane view is 0.3 mm or more.

Further, a lithium secondary battery according to another embodiment of the present invention includes a positive electrode, a negative electrode which does not have a negative electrode active material, and a separator which is arranged between the positive electrode and the negative electrode, and further includes an outer container which encloses the positive electrode, the negative electrode, and the separator. In the lithium secondary battery, at least a part of an edge of the separator, and an edge of the negative electrode on the same side as the part of the edge are located at the same distance from a facing inner wall of the outer container.

In the above-described lithium secondary battery, the negative electrode enclosed in the outer container can be at least partially larger than in the related art. As a result, a configuration in which the energy efficiency per unit volume and unit weight of the lithium secondary battery is increased can be adopted.

### Advantageous Effects of Invention

According to the present invention, it is possible to provide a lithium secondary battery with increased energy efficiency per unit volume and unit weight.

### Brief Description of Drawings

Fig. 1 is a plane view of a lithium secondary battery according to an embodiment of the present invention.
Fig. 2 is a plane view illustrating a part of the lithium secondary battery including a positive electrode, a negative electrode, and a separator according to the embodiment of the present invention.
Fig. 3 is a view illustrating a part of a cross section of the lithium secondary battery according to the embodiment of the present invention.
Fig. 4 is a plane view illustrating a part of a lithium secondary battery including a positive electrode, a negative electrode, and a separator according to Modification Example 1 of the present invention.
Fig. 5 is a plane view illustrating a part of a lithium secondary battery including a positive electrode, a negative electrode, and a separator according to Modification Example 2 of the present invention.

### Description of Embodiments

The embodiment of the present invention (hereinafter referred to as the "present embodiment") will hereinafter be described in detail while referring to the drawings as needed. In the drawings, the same element will be represented by the same reference numeral and an overlapping description will be omitted. Unless otherwise specifically described, the positional relationship such as vertical or horizontal one will be based on the positional relationship shown in the drawings. Further, a dimensional ratio in the drawings is not limited to the ratio shown in the drawings.

### [Configuration of Lithium Secondary Battery]

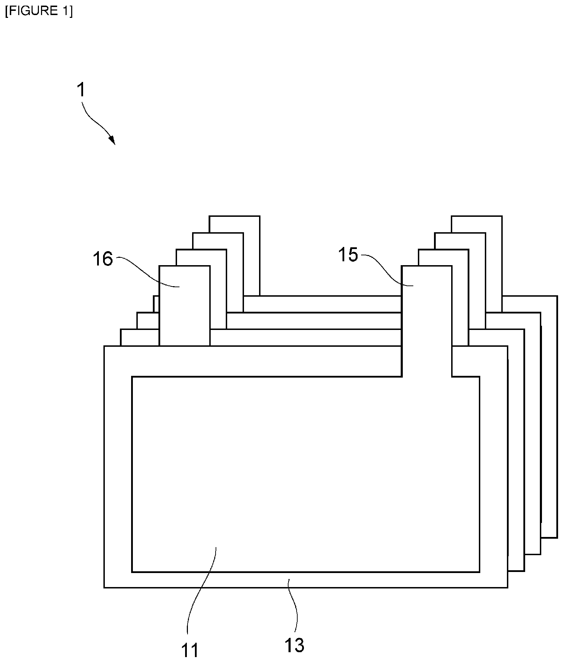

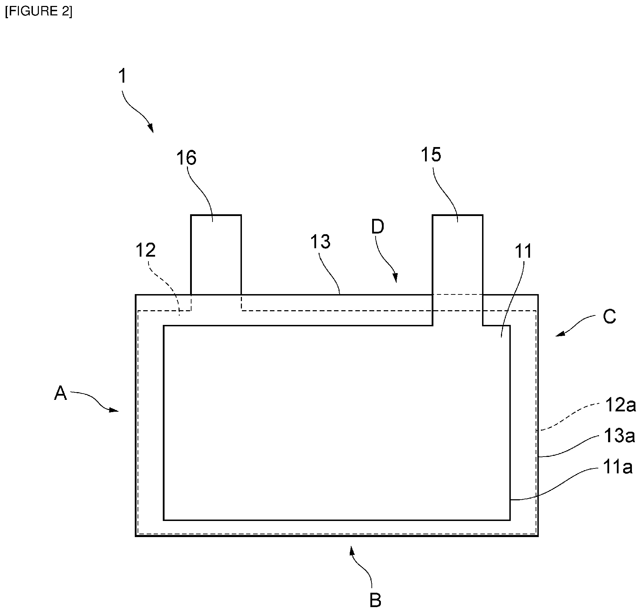

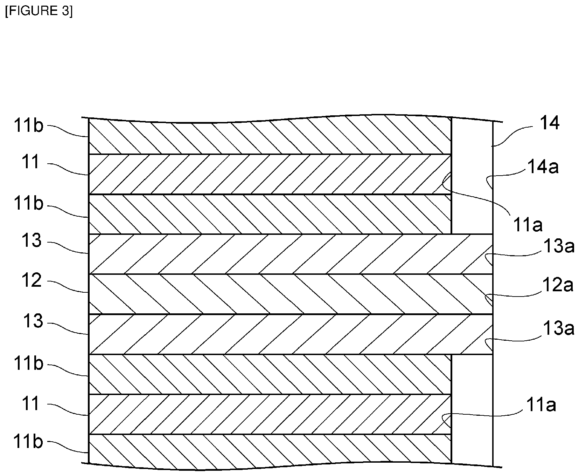

Fig. 1 is a plane view illustrating a configuration of a lithium secondary battery 1 according to an embodiment of the present invention. Fig. 2 is a plane view illustrating a part of the lithium secondary battery 1 including a positive electrode, a negative electrode, and a separator according to the embodiment of the present invention. Fig. 3 is a view illustrating a part of a cross section of the lithium secondary battery 1.

As illustrated in Figs. 1 to 3, the lithium secondary battery 1 includes a positive electrode 11, a negative electrode 12, and a separator 13 which is arranged between the positive electrode 11 and the negative electrode 12. As illustrated in the cross-sectional view in Fig. 3, the positive electrode 11, the negative electrode 12, and the separator 13 are laminated in layers. As illustrated in Fig. 1, the lithium secondary battery 1 is configured by laminating a plurality of sets (cells) of the positive electrode 11, the negative electrode 12, and the separator 13. The positive electrode 11, the negative electrode 12, and the separator 13 are sealed in an outer container 14 to constitute a pouch cell. Although the plurality of sets of the positive electrode 11, the negative electrode 12, and the separator 13 are enclosed in one pouch cell, one set of the positive electrode 11, the negative electrode 12, and the separator 13 may be enclosed. As illustrated in Figs. 1 and 2, a positive electrode terminal 15 and a negative electrode terminal 16 are connected to the positive electrode 11 and the negative electrode 12, respectively. The positive electrode terminal 15 and the negative electrode terminal 16 are configured to extend to the outside of the outer container 14 constituting the pouch cell and be able to be connected to an external circuit. As illustrated in Figs. 1 and 2, a surface when viewed in a plane view from a direction in which the positive electrode 11, the negative electrode 12, and the separator 13 are laminated in the lithium secondary battery 1 is a flat surface, and the shape thereof is a rectangular shape (square shape). However, there is no limitation thereto. The shapes of the positive electrode 11, the negative electrode 12, and the separator 13 in a plane view can be any shape, such as a circle, an ellipse, or a polygon, depending on the intended use or the like. The shapes of the positive electrode 11, the negative electrode 12, and the separator 13 in a plane view may be similar to each other.

The separator 13 prevents the positive electrode 11 and the negative electrode 12 from coming into contact with each other to cause a short circuit in the battery. In the lithium secondary battery 1 of the present embodiment, since an active material does not exist in the negative electrode, the wrapping of the material of the end surface of the negative electrode material can be eliminated, and thus a short circuit between the positive electrode 11 and the negative electrode 12 can be prevented. Therefore, in the related art, it is necessary to provide a negative electrode/separator margin (or also simply referred to as a "margin"), which is a distance between an edge 12a of the negative electrode 12 and an edge 13a of the separator 13 in a plane view, and to retract the edge 12a of the negative electrode 12 toward the inner side from the edge 13a of the separator 13. However, it is not necessary to provide the margin in the lithium secondary battery 1. In the lithium secondary battery 1 of the present embodiment, as illustrated in the cross-sectional view in Fig. 3, the margin between the edge 13a of the separator 13 and the edge 12a of the negative electrode 12 can be eliminated so that the margin is substantially 0. At this time, for example, as illustrated in Fig. 2, the edge 12a of the negative electrode 12 and the edge 13a of the separator 13 are arranged at the same position in a plane view at the positions corresponding to sides A, B, and C. At the position corresponding to the side D, the edge 12a of the negative electrode 12 and the edge 13a of the separator 13 are not arranged at the same position in a plane view and a margin is provided. In other words, at the position corresponding to the side D, the edge 12a of the negative electrode 12 is arranged to be positioned on the inner side of the edge 13a of the separator 13 in a plane view. Further, at the position, the edge 11a of the positive electrode 11 is arranged to be positioned on the inner side of the edge 12a of the negative electrode 12 in a plane view. At the positions corresponding to the sides A, B, and C, as illustrated in Fig. 3, the edge 12a of the negative electrode 12 and the edge 13a of the separator 13 come into contact with an inner wall 14a of the outer container 14.

On the other hand, in the lithium secondary battery 1, a positive electrode/separator margin, which is a distance between an edge 11a of the positive electrode 11 and the edge 13a of the separator 13, is provided in a range of, for example, 0.3 mm or more and 0.5 mm or less.

Even in a case where the negative electrode/separator margin is substantially 0, the dimensional variation of the positive electrode 11, the negative electrode 12, and the separator 13 occurs at the time of manufacturing or the positional shift occurs at the time of lamination, and thus an error of about ± 0.3 mm may occur. In the present specification, even in a case where the configuration has some margin due to the dimensional variation at the time of manufacturing, the positional shift and the like, the margin is assumed to be substantially 0. A case where the margin is substantially 0, in other words, the edge 12a of the negative electrode 12 and the edge 13a of the separator 13 are considered to be at the same position is, for example, a case where the margin is 0.3 mm or less, preferably a case where the margin is 0.2 mm or less, and more preferably a case where the margin is 0.1 mm or less.

Further, the edge 12a of the negative electrode 12 and the edge 13a of the separator 13 may not necessarily come into contact with the inner wall 14a of the outer container 14. However, it is preferable that the edge 12a of the negative electrode 12 and the edge 13a of the separator 13 are arranged to have at least partially the substantially same distance from the facing inner wall 14a of the outer container 14. For the same purpose as described above, a case where the distances between the inner wall 14a of the outer container 14 and the edge 12a of the negative electrode 12 and the edge 13a of the separator 13 are considered to be substantially the same distance is, for example, a case where a difference between the distances is within 0.3 mm, preferably a case where a difference between the distances is within 0.2 mm, and more preferably a case where a difference between the distances is within 0.1 mm.

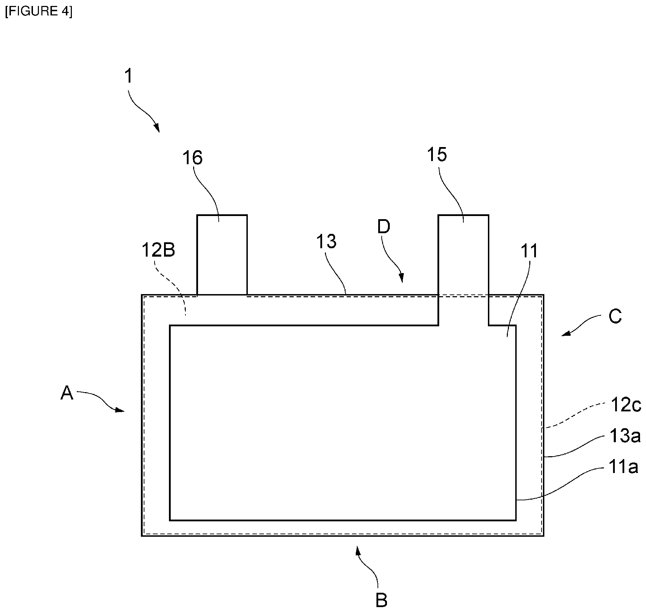

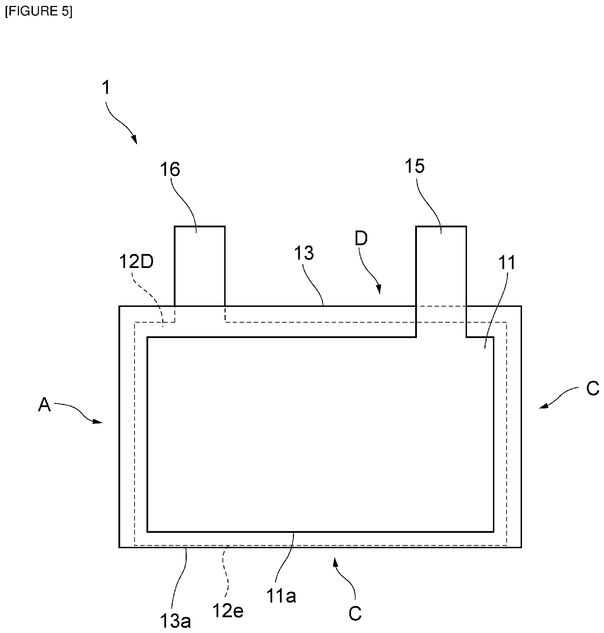

Further, as in a modification example illustrated in Fig. 4, a configuration in which an edge 12c of a negative electrode 12B has a margin of substantially 0 at positions corresponding to all of four sides A, B, C, and D of the negative electrode may be adopted. Further, as in a modification example in Fig. 5, even when an edge 12e of a negative electrode 12D has a margin of substantially 0 only at a position corresponding to a side B, and a margin may be provided at positions corresponding to the other sides. At the location corresponding to the side provided with the margin, the edge 12a of the negative electrode 12 is arranged to be positioned on the inner side of the edge 13a of the separator 13, and the edge 11a of the positive electrode 11 is arranged to be positioned on the inner side of the edge 12a of the negative electrode 12 in a plane view.

That is, in the lithium secondary battery 1 of the present embodiment, the rectangular negative electrode 12 and separator 13 have a configuration in which a margin is substantially 0 on at least one side of the negative electrode 12 in a plane view, and thus the negative electrode 12 can be made larger than that of the conventional configuration while preventing a short circuit of the electrode. As the number of sides provided with a margin of substantially 0 is increased among the four sides of the negative electrode 12, the size of the negative electrode 12 can be increased. Thus, it is preferable that the margin is set to substantially 0 on all of the four sides of the negative electrode 12. As a result, a configuration in which the energy efficiency per unit volume and unit weight of the lithium secondary battery 1 is increased can be adopted.

On the side provided with the margin, it is preferable to provide the margin in a range of 0.3 mm or more and 5.0 mm or less. The minimum distance of the margin is preferably smaller than the manufacturing variation in the sizes of the negative electrode 12 and the separator 13 and may be 0.2 mm or more or 0.1 mm or more. The maximum distance of the margin is preferably as small as possible, and is preferably 5.0 mm or less as described above, more preferably 3.0 mm or less, and even more preferably 1.0 mm or less.

Further, when the margin, which is a distance between the edge of the negative electrode and the edge of the separator of the lithium secondary battery, is set to at least partially substantially 0, a certain effect can be obtained in terms of increasing the size of the negative electrode. For example, even in a cylindrical cell in which the positive electrode 11, the negative electrode 12, and the separator 13 of the lithium secondary battery 1 are laminated and arranged in a cylindrical shape, a portion in which a margin which is a distance between the edge of the negative electrode 12 and the edge of the separator 13 is substantially 0 is provided so that the size of the negative electrode can be increased.

The lithium secondary battery of the present embodiment disclosed in the present specification is typically a liquid electrolyte-based lithium secondary battery (particularly a non-aqueous electrolyte solution-based lithium secondary battery) including an electrolyte solution, a solid or semi-solid electrolyte-based lithium secondary battery including a polymer electrolyte, or a gel electrolyte-based lithium secondary battery including a gel electrolyte. However, as long as the problem of the present invention is solved, the lithium secondary battery of the present embodiment may be an all-solid-state battery including another, for example, an inorganic solid electrolyte.

### (Negative Electrode)

The negative electrode 12 does not have a negative electrode active material. In the present specification, the "negative electrode active material" is a material that causes an electrode reaction, that is, an oxidation reaction and a reduction reaction at the negative electrode. Specifically, examples of the negative electrode active material in the present embodiment include a lithium metal and a host material for a lithium element (lithium ions or lithium metal). The host material for the lithium element means a material provided to retain the lithium ions or the lithium metal in the negative electrode 12. Such a retaining mechanism is not particularly limited, and examples thereof include intercalation, alloying, and occlusion of metallic clusters, and intercalation is typically used.

In the lithium secondary battery 1 of the present embodiment, since the negative electrode 12 does not have a negative electrode active material before the initial charge of the battery, charge and discharge are performed by precipitating a lithium metal on the negative electrode 12 and electrolytically dissolving the precipitated lithium metal. Therefore, in the lithium secondary battery 1 of the present embodiment, the volume occupied by the negative electrode active material and the mass of the negative electrode active material are reduced as compared with a lithium secondary battery containing the negative electrode active material, and the volume and mass of the entire battery are small, so that the energy density is high in principle.

In the lithium secondary battery 1 of the present embodiment, the negative electrode 12 does not have a negative electrode active material before the initial charge of the battery, a lithium metal is precipitated on the negative electrode when the battery is charged, and the precipitated lithium metal is electrolytically dissolved when the battery is discharged. Therefore, in the lithium secondary battery 1 of the present embodiment, the negative electrode 12 serves as a negative electrode current collector.

In a case where the lithium secondary battery 1 of the present embodiment is compared with a lithium ion battery (LIB) and a lithium metal battery (LMB), the following points are different.

In the lithium ion battery (LIB), a negative electrode contains a host material for a lithium element (lithium ions or lithium metal), this material is filled with the lithium element when the battery is charged, and the host material releases the lithium element, thereby discharging the battery. The LIB is different from the lithium secondary battery 1 of the present embodiment in that the negative electrode has the host material for the lithium element.

The lithium metal battery (LMB) is manufactured by using, as a negative electrode, an electrode having lithium metal on the surface thereof or single lithium metal. That is, the LMB is different from the lithium secondary battery 1 of the present embodiment in that the negative electrode has the lithium metal, which is the negative electrode active material, immediately after assembling the battery, that is, before the initial charge of the battery. The LMB uses the electrode containing a lithium metal having high flammability and reactivity in the manufacturing. However, since the lithium secondary battery of the present embodiment is manufactured using the negative electrode which does not have a lithium metal, the lithium secondary battery in the present embodiment has more excellent safety and productivity. In addition, the lithium secondary battery 1 of the present embodiment has excellent energy density and cycle characteristics as compared with the LMB.

In the present specification, the expression that the negative electrode "does not have a negative electrode active material" means the negative electrode does not have the negative electrode active material or does not substantially have the negative electrode active material. The fact that the negative electrode does not substantially have the negative electrode active material means the content of the negative electrode active material in the negative electrode is 10% by mass or less relative to the total mass of the negative electrode. The content of the negative electrode active material in the negative electrode is preferably 5.0% by mass or less and may be 1.0% by mass or less, 0.1% by mass or less, or 0.0% by mass or less relative to the total mass of the negative electrode. Since the negative electrode does not have the negative electrode active material or the amount of the negative electrode active material in the negative electrode is within the above-described range, the energy density of the lithium secondary battery 1 is high.

In the present specification, the "lithium secondary battery including a negative electrode which does not have a negative electrode active material" means the negative electrode does not have the negative electrode active material before initial charge of the battery. Therefore, the phrase "negative electrode which does not have a negative electrode active material" may be rephrased as "negative electrode which does not have a negative electrode active material before initial charge of the battery", "negative electrode which does not have a negative electrode active material other than a lithium metal regardless of the charge state of the battery and does not have a lithium metal before initial charge", "negative electrode current collector which does not have a lithium metal before initial charge", or the like. In addition, the "lithium secondary battery including a negative electrode which does not have a negative electrode active material" may be rephrased as an anode free lithium battery, a zero anode lithium battery, or an anodeless lithium battery.

In the present specification, "before initial charge" of the battery means a state from the time when the battery is assembled to the time when the battery is first charged. In addition, "at the end of discharge" of the battery means a state in which a discharge reaction involving the positive electrode active material does not substantially occur even when the voltage of the battery is further reduced, and the voltage of the battery at the time is, for example, 1.0 to 3.5 V, 2.0 to 3.2 V, or 2.5 to 3.0 V.

In the negative electrode 12 of the present embodiment, regardless of the charge state of the battery, the content of the negative electrode active material other than the lithium metal is 10% by mass or less, preferably 5.0% by mass or less, and may be 1.0% by mass or less, 0.1% by mass or less, 0.0% by mass or less, or 0% by mass relative to the total mass of the negative electrode.

In addition, in the negative electrode 12 of the present embodiment, before the initial charge, the content of the lithium metal is 10% by mass or less, preferably 5.0% by mass or less, and more preferably 1.0% by mass or less or 0.1% by mass or less relative to the total mass of the negative electrode. The negative electrode of the present embodiment particularly preferably does not have a lithium metal before the initial charge, that is, the content of the lithium metal is 0% by mass relative to the total mass of the negative electrode.

In the lithium secondary battery 1 of the present embodiment, in a case where the voltage of the battery is 2.5 V or more and 3.5 V or less, even when the content of the lithium metal may be 10% by mass or less (preferably 5.0% by mass or less, and may be 1.0% by mass or less) relative to the total mass of the entire negative electrode, or in a case where the voltage of the battery is 2.5 V or more and 3.0 V or less, the content of the lithium metal may be 10% by mass or less (preferably 5.0% by mass or less, and may be 1.0% by mass or less) relative to the total mass of the negative electrode.

In addition, in the lithium secondary battery 1 of the present embodiment, a ratio M_{3.0}/M_{4.2} of a mass M_{3.0} of the lithium metal precipitated on the negative electrode in a state in which the voltage of the battery is 3.0 V to a mass M_{4.2} of the lithium metal precipitated on the negative electrode in a state in which the voltage of the battery is 4.2 V is preferably 30% or less, more preferably 25% or less, and still more preferably 20% or less. The ratio M_{3.0}/M_{4.2} may be 1.0% or more, 2.0% or more, 3.0% or more, or 4.0% or more.

Examples of the negative electrode active material in the present specification include lithium metals, alloys containing a lithium metal, carbon-based materials, metal oxides, metals alloyed with lithium, and alloys containing the metals. The carbon-based material is not particularly limited and examples include graphene, graphite, hard carbon, mesoporous carbon, carbon nanotube, and carbon nanohorn. The metal oxide is not particularly limited and examples include titanium oxide-based compounds, tin oxide-based compounds, and cobalt oxide-based compounds. Examples of metals alloyed with lithium include silicon, germanium, tin, lead, aluminum, and gallium.

The negative electrode 12 is not particularly limited as long as the negative electrode does not have a negative electrode active material and can be used as a current collector. For example, the negative electrode is an electrode consisting of at least one selected from the group consisting of Cu, Ni, Ti, and Fe, metals that are not alloyed with Li, alloys thereof, and stainless steel (SUS), and preferably an electrode consisting of at least one selected from the group consisting of Cu, Ni, alloys thereof, and stainless steel (SUS). When this negative electrode is used, the energy density and productivity of the battery tend to be further improved.

When SUS is used as the negative electrode, any well-known type of SUS can be used. One or two or more of the negative electrode materials may be used either singly or in combination. The "metal that is not alloyed with Li" as used herein means a metal that does not react with a lithium ion or lithium metal to form an alloy under the operation conditions of the lithium secondary battery.

The negative electrode 12 is preferably at least one selected from the group consisting of Cu, Ni, Ti, Fe, alloys thereof, and stainless steel (SUS), and more preferably at least one selected from the group consisting of Cu, Ni, alloys thereof, and stainless steel (SUS). The negative electrode 12 is even more preferably Cu, Ni, alloys thereof, or stainless steel (SUS). When this negative electrode 12 is used, the energy density and productivity of the battery tend to be further improved.

The average thickness of the negative electrode 12 of the present embodiment is preferably 4 µm or more and 20 µm or less, more preferably 5 µm or more and 18 µm or less, and still more preferably 6 µm or more and 15 µm or less. In such a mode, since the occupation volume of the negative electrode in the lithium secondary battery is decreased, the lithium secondary battery 1 has a more improved energy density.

In addition, in the present specification, the term "average thickness" means an additive average when the target member is observed at an enlarged scale using a scanning electron microscope or an optical microscope and the thickness of three or more locations is measured.

### (Positive Electrode)

The positive electrode 11 is not particularly limited as long as the positive electrode has a positive electrode active material and is a positive electrode commonly used in a lithium secondary battery, and a known material can be selected as needed, depending on the use of the lithium secondary battery. Since the positive electrode 11 has a positive electrode active material, the stability and the output voltage are high. The positive electrode active material is formed on the surface of the positive electrode 11 as a positive electrode active material layer 11b.

In the present specification, the "positive electrode active material" is a material that causes an electrode reaction, that is, an oxidation reaction and a reduction reaction at the positive electrode. Specific examples thereof include a host material of a lithium element (typically, lithium ion). The positive electrode active material in the present specification is typically a material that causes an oxidation-reduction reaction under the condition in which the voltage of the lithium secondary battery of the present embodiment is in a range of 3.0 to 4.2 V, or a material that causes an oxidation-reduction reaction in a potential range of 3.0 to 4.2 V (vs. Li/Li⁺ reference electrode).

Such a positive electrode active material is not particularly limited and examples include metal oxides and metal phosphates. The metal oxides are not particularly limited and examples include cobalt oxide-based compounds, manganese oxide-based compounds, and nickel oxide-based compounds. The metal phosphates are not particularly limited and examples include iron phosphate-based compounds and cobalt phosphate-based compounds.

Examples of typical positive electrode active materials include LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO, LiCoPO, LiFeOF, LiNiOF, and LiTiS₂. One or two or more of the positive electrode active materials may be used either singly or in combination. The positive electrode active material of the present embodiment is preferably at least one selected from the group consisting of LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, and LiMn₂O₄.

The positive electrode 11 may contain components other than the positive electrode active material. Such components are not particularly limited and examples include known conductive additives, binders, solid polymer electrolytes, and inorganic solid electrolytes.

The conductive additive to be contained in the positive electrode 11 is not particularly limited and examples include carbon black, single wall carbon nanotube (SWCNT), multi-wall carbon nanotube (MWCNT), carbon nanofiber (CF), and acetylene black.

The binder is not particularly limited and examples thereof include polyvinylidene fluoride, polytetrafluoroethylene, styrene butadiene rubber, acrylic resins, and polyimide resins. One or two or more of each of the conductive additives and binders as described above may be used either singly or in combination.

The content of the positive electrode active material in the positive electrode 11 may be, for example, 50% by mass or more and 100% by mass or less relative to the total mass of the positive electrode 11.

Regarding the conductive additive, the blending amount at the time of manufacturing the positive electrode of the present embodiment and the content at the end of discharge of the battery may be, for example, 0.5% by mass or more and 30% by mass or less, 1.0% by mass or more and 20% by mass or less, or 1.5% by mass or more and 10% by mass or less relative to the total mass of the positive electrode.

Regarding the binder, the blending amount at the time of manufacturing the positive electrode of the present embodiment and the content at the end of discharge of the battery may be, for example, 0.5% by mass or more and 30% by mass or less, 1.0% by mass or more and 20% by mass or less, or 1.5% by mass or more and 10% by mass or less relative to the total mass of the positive electrode.

Regarding the electrolyte, the blending amount at the time of manufacturing the positive electrode of the present embodiment and the content at the end of discharge of the battery may be, for example, 0.5% by mass or more and 30% by mass or less, 1.0% by mass or more and 20% by mass or less, or 1.5% by mass or more and 10% by mass or less relative to the total mass of the positive electrode.

The average thickness of the positive electrode in the present embodiment is, for example, 10 µm or more and 300 µm or less, and is preferably 30 µm or more and 200 µm or less, or 50 µm or more and 150 µm or less. However, the average thickness of the positive electrode can be appropriately adjusted according to the desired capacity of the battery.

### (Separator)

The separator 13 of the present embodiment is a member for ensuring the ionic conductivity of a lithium ion, which is a charge carrier, between the positive electrode 11 and the negative electrode 12 while preventing the battery from being shortcircuited by separating the positive electrode 11 and the negative electrode 12. That is, the separator 13 has a function of separating the positive electrode 11 and the negative electrode 12 and a function of ensuring the ionic conductivity of lithium ions. As such a separator, one member having two functions described above may be used singly, or two or more members having one function described above may be used in combination. The separator is not particularly limited as long as it has the above-described functions, and examples thereof include a porous member having an insulating property, a polymer electrolyte, a gel electrolyte, and an inorganic solid electrolyte. Typically, at least one selected from the group consisting of a porous member having an insulating property, a polymer electrolyte, and a gel electrolyte may be used.

In a case where the separator 13 includes a porous member having an insulating property, the member exhibits ionic conductivity by filling the pores of the member with a material having ionic conductivity. Examples of the material to be filled include an electrolyte solution, a polymer electrolyte, and a gel electrolyte.

As the separator 13 of the present embodiment, one or two or more of a porous member having an insulating property, a polymer electrolyte, and a gel electrolyte can be used either singly or in combination. However, when a porous member having an insulating property is used singly as the separator, the lithium secondary battery needs to further include an electrolyte solution to ensure ionic conductivity.

The material constituting the above-described porous member having an insulating property is not particularly limited, and examples thereof include an insulating polymer material. Specific examples thereof include polyethylene (PE) and polypropylene (PP). That is, the separator of the present embodiment may have a porous polyethylene (PE) film, a porous polypropylene (PP) film, or a laminated structure thereof.

The above-described polymer electrolyte is not particularly limited, and examples thereof include a solid polymer electrolyte that mainly contains a polymer and an electrolyte, and a semi-solid polymer electrolyte that mainly contains a polymer, an electrolyte, and a plasticizer.

The above-described gel electrolyte is not particularly limited, and examples thereof include those that mainly contain a polymer and a liquid electrolyte (that is, a solvent and an electrolyte).

The polymer that can be included in the polymer electrolyte and the gel electrolyte is not particularly limited. However, for example, a polymer containing a functional group including an oxygen atom such as ether and an ester, a halogen group, and a polar group such as a cyano group may be included. Specific examples include resins having an ethylene oxide unit in the main chain and/or a side chain such as polyethylene oxide (PEO), resins having a propylene oxide unit in the main chain and/or a side chain such as polypropylene oxide (PPO), acrylic resins, vinyl resins, ester resins, nylon resins, polyvinylidene fluoride (PVDF), polyacrylonitrile (PAN), polysiloxane, polyphosphazene, polymethyl methacrylate, polyamide, polyimides, aramid, polylactic acid, polyurethane, polyacetal, polysulfone, polyethylene carbonate, polypropylene carbonate, and polytetrafluoroethylene. One or two or more of the resins may be used either singly or in combination.

Examples of the electrolytes included in the polymer electrolyte and the gel electrolyte include salts of Li, Na, K, Ca, or Mg, and the like. Typically, in the present embodiment, the polymer electrolyte and the gel electrolyte contain a lithium salt.

The lithium salt is not particularly limited, and examples thereof include Lil, LiCl, LiBr, LiF, LiBF₄, LiPF₆, LiAsF₆, LiSOsCFs, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄. Preferably, at least one selected from the group consisting of LiN(SO₂F)₂, LiN(SO₂CF₃)₂, and LiN(SO₂CF₃CF₃)₂ may be used. One or two or more of the salts or lithium salts may be used either singly or in combination.

The blending ratio of the polymer and the lithium salt in the polymer electrolyte and the gel electrolyte may be determined by the ratio of the polar group of the polymer to the lithium atom of the lithium salt. For example, in a case where the polymer has oxygen atoms, the polymer may be determined by the ratio ([Li]/[O]) of the number of oxygen atoms in the polymer to the number of lithium atoms in the lithium salt. The blending ratio of the polymer and the lithium salt to the resin in the polymer electrolyte and the gel electrolyte can be adjusted so that the ratio ([Li]/[O]) is 0.02 or more and 0.20 or less, 0.03 or more and 0.15 or less, or 0.04 or more and 0.12 or less.

The solvent contained in the gel electrolyte is not particularly limited. For example, one or two or more of the solvents that can be contained in the electrolyte solution described later can be used either singly or in combination. Examples of preferable solvents are the same as those in the electrolyte solution described later.

The plasticizer contained in the semi-solid polymer electrolyte is not particularly limited, and examples thereof include the same component as the solvent that can be contained in the gel electrolyte and various oligomers.

The separator 13 of the present embodiment may be covered with a separator coating layer. The separator coating layer may cover both of the surfaces of the separator or may cover only one of the surfaces of the separator 13. The separator coating layer is not particularly limited as long as the member does not react with lithium ions. The separator coating layer preferably bonds the separator to the adjacent layer firmly. Such a separator coating layer is not particularly limited and examples include members containing a binder such as polyvinylidene fluoride (PVDF), a composite material (SBR-CMC) of styrene butadiene rubber and carboxymethyl cellulose, polyacrylic acid (PAA), lithium polyacrylate (Li-PAA), polyimide (PI), polyamideimide (PAI), or aramid. The separator coating layer may be obtained by adding, to the above-described binder, inorganic particles such as silica, alumina, titania, zirconia, magnesium oxide, magnesium hydroxide, and lithium nitrate.

The average thickness of the separator 13 of the present embodiment is preferably 20 µm or less, more preferably 18 µm or less, and still more preferably 15 µm or less. In such a mode, since the occupation volume of the separator in the lithium secondary battery 1 is decreased, the lithium secondary battery has a more improved energy density. In addition, the average thickness of the separator 13 is preferably 5 µm or more, more preferably 7 µm or more, and still more preferably 10 µm or more. In such a mode, the positive electrode 11 and the negative electrode 12 can be more reliably separated, and a short circuit of the battery can be further suppressed.

### (Electrolyte Solution)

The lithium secondary battery 1 preferably further includes an electrolyte solution. The electrolyte solution is a liquid containing a solvent and an electrolyte, and has ionic conductivity. The electrolyte solution may be rephrased as a liquid electrolyte and act as a conductive path for lithium ions. Therefore, when the lithium secondary battery has the electrolyte solution, the internal resistance is further reduced, and there is a tendency that the energy density, capacity, and cycle characteristics are further improved. The electrolyte solution may be infiltrated into the separator 13, and the electrolyte solution may be encapsulated together with the laminate of the negative electrode, the separator, the positive electrode, and the positive electrode current collector to obtain a finished product of the lithium secondary battery 1.

As the electrolyte contained in the electrolyte solution, an electrolyte that can be contained in the polymer electrolyte and the gel electrolyte, in particular, one or two or more of the lithium salts can be used either singly or in combination. The preferable lithium salts are the same as those in the polymer electrolyte and the gel electrolyte.

Examples of the solvent contained in the electrolyte solution include a non-aqueous solvent having a fluorine atom (hereinafter, referred to as a "fluorinated solvent") and a non-aqueous solvent having no fluorine atom (hereinafter, referred to as a "non-fluorine solvent").

The fluorinated solvent is not particularly limited, and examples thereof include 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, and the like.

The non-fluorine solvent is not particularly limited, and examples thereof include triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, and 12-crown-4.

One or two or more of the fluorinated solvents and/or the non-fluorine solvents can be freely used either singly or in combination at any proportion. The contents of the fluorinated solvent and the non-fluorine solvent are not particularly limited, and the proportion of the fluorinated solvent in the total volume of the solvent may be 0 to 100% by volume, and the proportion of the non-fluorine solvent in the total volume of the solvent may be 0% to 100% by volume.

### (Outer Container)

The outer container 14 accommodates the positive electrode 11, the negative electrode 12, the separator 13, the electrolyte solution, and the like of the lithium secondary battery 1, and is air-tightly sealed. As the material of the outer container 14, for example, a laminate film is used.

### (Positive Electrode Terminal and Negative Electrode Terminal)

The positive electrode terminal 15 has one end connected to the positive electrode 11 and extending to the outside of the outer container 14, and the other end connected to an external circuit (not illustrated). The negative electrode terminal 16 has one end connected to the negative electrode 12 and extending to the outside of the outer container 14, and the other end connected to an external circuit (not illustrated). The materials of the positive electrode terminal 15 and the negative electrode terminal 16 are not particularly limited as long as the materials are conductive, and examples include Al, Ni, and the like.

### Example 1

### [Experiment on Cell Defect Rate]

Here, either the lithium secondary battery 1 of the present embodiment or a conventional lithium secondary battery was used to perform experiments to obtain the cell defect rate while changing a margin which is a distance between the edge 13a of the separator 13 and the edge 12a of the negative electrode 12 in a plane view. In addition, Example is an experiment performed using the lithium secondary battery 1 of the present embodiment and Comparative Example is an experiment performed for comparison with the lithium secondary battery 1 of the present embodiment.

In the experiments, the following lithium secondary batteries were used. In Comparative Examples 1 to 3, a conventional lithium secondary battery having a negative electrode containing a negative electrode active material was used. In these lithium secondary batteries, the negative electrode capacity was set to 350 mAh/g, and the NP ratio, which is a capacity ratio of the negative electrode to the positive electrode, was set to 1.05. In Comparative Examples 4 to 7 and Examples, a lithium secondary battery having a negative electrode not containing a negative electrode active material was used. A copper foil (Cu foil) was used for the negative electrode. The number of laminated sets of the positive electrode, the separator, and the negative electrode was set to 25. The positive electrode basis capacity was set to 25 mg/cm² or 10 mg/cm². The positive electrode active material capacity was set to 200 mAh/g, and the active material ratio was set to 97%. The positive electrode/negative electrode margin, which is a distance between the edge of the positive electrode and the edge of the negative electrode, was set to 2 mm. The negative electrode/separator margin (margin), which is a distance between the negative electrode and the separator, was changed between 0 or more and 2.5 mm. In addition, the number of sides with a margin excluding 0 was changed from 0 to 4 as the number of sides with a margin. That is, when the number of sides with a margin is 4, the margin is provided on all sides of the rectangle, and when the number of sides with a margin is 1, the margin is provided on only one of the four sides of the rectangle. While changing these conditions, the volume energy density (Wh/L) and the cell defect rate (%) were obtained as follows.

### [Comparative Examples 1 to 3]

In Comparative Examples 1 to 3, the conventional lithium secondary battery having the negative electrode containing the negative electrode active material was used. The conditions and experimental results of Comparative Examples 1 to 3 are as shown in Table 1 below.

**[Table 1]**

| | Positive electrode basis capacity (mg/cm²) | Positive electrode active material capacity (mAh/g) | Negative electrode capacity (mAh/g)/NP ratio | Negative electrode /Separator margin (mm) | Number of sides with margin | Volume energy density (Wh/L) | Cell defect rate (%) |
|---|---|---|---|---|---|---|---|
| Comparative Example 1 | 25 | 200 | 350/1.05 | 2.5 | 4 | 700 | < 0.001 |
| Comparative Example 2 | 25 | 200 | 350/1.05 | 0.5 | 4 | 705 | 0.02 |
| Comparative Example 3 | 25 | 200 | 350/1.05 | 0 | 0 | 710 | 5 |

In the lithium secondary batteries of Comparative Examples 1 to 3, the volume energy density is 700 to 710, which is smaller than that of the lithium secondary battery 1 of the present embodiment having a negative electrode which does not contain a negative electrode active material, described later. In Comparative Example 1, a margin of 2.5 mm was provided, and the cell defect rate was less than 0.001%. In Comparative Example 2, a margin of 0.5 mm was provided, and the cell defect rate was 0.02%. In Comparative Example 3, the margin was set to 0, and the cell defect rate was 5%.

As described above, in the conventional lithium secondary battery having the negative electrode containing the negative electrode active material, the cell defect rate is increased by reducing the margin. In particular, in a case where the margin was set to 0, the defect rate was high.

### [Comparative Examples 4 and 5 and Example 1]

In the following Comparative Examples and Examples, a lithium secondary battery having a negative electrode which does not contain a negative electrode active material is used. The conditions and experimental results of Comparative Examples 4 and 5 and Example 1 in which the positive electrode basis capacity is set to 25 mg/cm² are as shown in Table 2 below.

**[Table 2]**

| | Positive electrode basis capacity (mg/cm²) | Positive electrode active material capacity (mAh/g) | Negative electrode /Separator margin (mm) | Number of sides with margin | Volume energy density (Wh/L) | Cell defect rate (%) |
|---|---|---|---|---|---|---|
| Comparative Example 4 | 25 | 200 | 2.5 | 4 | 1484 | < 0.001 |
| Comparative Example 5 | 25 | 200 | 0.5 | 4 | 1658 | 0.003 |
| Example 1 | 25 | 200 | 0 | 0 | 1707 | 0.009 |

In the lithium secondary battery of Comparative Example 4, a margin of 2.5 mm was provided, the volume energy density was 1484 Wh/L, and the cell defect rate was less than 0.001%. In the lithium secondary battery of Comparative Example 5, a margin of 0.5 mm was provided, the volume energy density was 1658 Wh/L, and the cell defect rate was 0.003%. In the lithium secondary battery of Example 1, the margin was set to 0, the volume energy density was 1707 Wh/L, and the cell defect rate was 0.009%.

### [Comparative Examples 6 and 7 and Example 2]

In Comparative Examples 6 to 7 and Example 2, the positive electrode basis capacity was set to 10 mg/cm², and the following conditions and experimental results are as shown in Table 3 below.

**[Table 3]**

| | Positive electrode basis capacity (mg/cm²) | Positive electrode active material capacity (mAh/g) | Negative electrode /Separator margin (mm) | Number of sides with margin | Volume energy density (Wh/L) | Cell defect rate (%) |
|---|---|---|---|---|---|---|
| Comparative Example 6 | 10 | 200 | 2.5 | 4 | 1129 | < 0.001 |
| Comparative Example 7 | 10 | 200 | 0.5 | 4 | 1261 | 0.002 |
| Example 2 | 10 | 200 | 0 | 0 | 1298 | 0.005 |

In the lithium secondary battery of Comparative Example 6, a margin of 2.5 mm was provided, the volume energy density was 1129 Wh/L, and the cell defect rate was less than 0.001%. In the lithium secondary battery of Comparative Example 7, a margin of 0.5 mm was provided, the volume energy density was 1261 Wh/L, and the cell defect rate was 0.002%. In the lithium secondary battery of Example 2, the margin was set to 0, the volume energy density was 1298 Wh/L, and the cell defect rate was 0.005%.

### [Examples 3 to 5]

In Examples 3 to 5, as in Example 2, the positive electrode basis capacity was set to 10 mg/cm², and while changing the number of sides with a margin to 1 to 3, the experiment was performed. The margin on the side provided with the margin was set to 0.5 mm, and the margin on the side excluding the side provided with the margin was set to 0. The conditions and experimental results of Examples 3 to 5 are as shown in Table 4 below.

**[Table 4]**

| | positive electrode basis capacity (mg/cm²) | Positive electrode active material capacity (mAh/g) | Negative electrode /Separator margin (mm) | Number of sides with margin | Volume energy density (Wh/L) | Cell defect rate (%) |
|---|---|---|---|---|---|---|
| Example 3 | 10 | 200 | 0/0.5 | 1 | 1292 | 0.004 |
| Example 4 | 10 | 200 | 0/0.5 | 2 | 1285 | 0.0035 |
| Example 5 | 10 | 200 | 0/0.5 | 3 | 1273 | 0.003 |

In the lithium secondary battery of Example 3, a margin was provided only on one side out of four sides. The volume energy density of the lithium secondary battery of Example 3 was 1292 Wh/L, and the cell defect rate was 0.004%.

In the lithium secondary battery of Example 4, a margin was provided on two sides of four sides. The volume energy density of the lithium secondary battery of Example 4 was 1285 Wh/L, and the cell defect rate was 0.0035%.

In the lithium secondary battery of Example 5, a margin was provided on three sides of four sides. The volume energy density of the lithium secondary battery of Example 5 was 1273 Wh/L, and the cell defect rate was 0.003%.

As can be seen from the comparison between Comparative Examples 4 to 7 and Examples 1 and 2 described above, in the lithium secondary battery of the present embodiment having a negative electrode which does not contain a negative electrode active material, in a case where the margin is set to 0, a high volume energy density can be obtained while suppressing the cell defect rate to a low level. In addition, as can be seen from Examples 2 to 5, the volume energy density was increased as the number of sides with a margin set to 0 was increased, and the cell defect rate was decreased. However, even in a case where the margin was 0 on all sides, the cell defect rate was relatively good and the battery was able to be put into practical use.

### [Modification Examples]

The embodiments described above are provided merely to explain the present invention and are not intended to limit the present invention to the embodiments. Various modifications are possible without departing from the scope and spirit of the present invention.

For example, the lithium secondary battery may have a current collector arranged so as to be in contact with the positive electrode or the negative electrode. In this case, the positive electrode terminal and the negative electrode terminal are connected to the current collector. Such a current collector is not particularly limited and examples include current collectors usable as a negative electrode material. In a case where the lithium secondary battery does not have a current collector, the negative electrode and the positive electrode themselves serve as current collectors.

The embodiments described above are provided to make the present invention easier to understand, and are not intended to limit interpretation of the present invention. Each element included in the embodiments and the arrangement, materials, conditions, shape, size, and the like are not limited to those exemplified and can be appropriately changed. The constituents described in the different embodiments may be partially replaced or combined.

### Industrial Applicability

The lithium secondary battery of the present invention has excellent energy efficiency per unit volume and unit weight so that the battery has industrial applicability as a power storage device to be used for various uses.

### Reference Signs List

- 1: lithium secondary battery

- 11: positive electrode
- 12: negative electrode
- 13: separator
- 14: outer container
- 15: positive electrode terminal
- 16: negative electrode terminal

## Claims

1. A lithium secondary battery, comprising:
a positive electrode;
a negative electrode which does not have a negative electrode active material; and
a separator which is arranged between the positive electrode and the negative electrode,
wherein at least a part of an edge of the negative electrode, and an edge of the separator corresponding to the part of the edge of the negative electrode are arranged at the same position in a plane view.

2. The lithium secondary battery according to Claim 1, wherein the negative electrode and the separator each have a rectangular shape.

3. The lithium secondary battery according to Claim 2, wherein at least one side of the negative electrode is arranged at the same position as a side of the separator corresponding to the one side of the negative electrode in a plane view.

4. The lithium secondary battery according to Claim 3, wherein other sides of the negative electrode excluding the at least one side are positioned on an inner side with respect to other sides of the separator corresponding to the other sides of the negative electrode in a plane view.

5. The lithium secondary battery according to Claim 4, wherein a distance between the other sides of the negative electrode and the corresponding other sides of the separator in a plane view is 0.3 mm or more and 5.0 mm or less.

6. The lithium secondary battery according to Claim 2, wherein four sides of the negative electrode and four sides of the separator are arranged at the same positions in a plane view.

7. The lithium secondary battery according to any one of Claims 1 to 6, wherein an edge of the positive electrode is positioned on an inner side with respect to a corresponding edge of the negative electrode in a plane view.

8. The lithium secondary battery according to Claim 7, wherein a distance between the edge of the positive electrode and the corresponding edge of the negative electrode in a plane view is 0.3 mm or more.

9. A lithium secondary battery, comprising:
a positive electrode;
a negative electrode which does not have a negative electrode active material;
a separator which is arranged between the positive electrode and the negative electrode; and
an outer container which encloses the positive electrode, the negative electrode, and the separator,
wherein at least a part of an edge of the separator, and an edge of the negative electrode on the same side as the part of the edge are located at the same distance from a facing inner wall of the outer container.
